(19) Europäisches Patentamt
European Patent Office
Office européen des brevets

(11) Publication number: **0 172 448 B1**

# (12) EUROPEAN PATENT SPECIFICATION

(45) Date of publication of patent specification: **05.02.92**

(51) Int. Cl.5: **C08F 120/58**, C08J 3/11, C08L 33/24

(21) Application number: **85109475.5**

(22) Date of filing: **27.07.85**

## (54) Solid lithium and ammonium salts of poly(acrylamidomethylpropanesulfonic acid) and use thereof to thicken highly polar organic solvents.

(30) Priority: **31.07.84 US 636647**

(43) Date of publication of application:
**26.02.86 Bulletin 86/09**

(45) Publication of the grant of the patent:
**05.02.92 Bulletin 92/06**

(84) Designated Contracting States:
**AT BE CH DE FR GB IT LI NL**

(56) References cited:
**US-A- 3 931 089**
**US-A- 4 065 422**

(73) Proprietor: **HENKEL CORPORATION (a Delaware corp.)**
**7900 West 78th Street**
**Minneapolis Minnesota 55435(US)**

(72) Inventor: **Howland, Warren W.**
**12111 North Mississippi Drive**
**Champlin Minnesota 55316(US)**

(74) Representative: **von Kreisler, Alek, Dipl.-Chem. et al**
**Deichmannhaus am Hauptbahnhof**
**W-5000 Köln 1(DE)**

**EP 0 172 448 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### FIELD OF THE INVENTION

This invention relates to novel solid salts of certain acidic acrylic homopolymers and to the thickening of highly polar organic solvents with such salts. More particularly, this invention relates to the solid salt poly-(lithium 2-acrylamido-2-methylpropanesulfonate), and its use in thickening methanol.

### BACKGROUND OF THE INVENTION

Polymers such as poly(2-acrylamido-2-methylpropanesulfonic acid) are useful as thickening agents. U.S. Patent No. 3,931,089 discloses that a homopolymer of 2-acrylamido-2-methylpropanesulfonic acid or its salts is stable as a thickener in highly acidic aqueous solutions which may also contain a 2 to 3 carbon alcohol. The patentee discloses that the acid homopolymer and the alkali and alkaline earth metal salts of the homopolymer are very soluble in strong acid solutions. However, the acid form of this polymer can be difficult to prepare and undesireable for use in other applications due to its high acidity. In particular, the drying of an aqueous solution of the acid form of the polymer while in contact with a metallic surface may corrode the metallic surface.

The acid form of the monomer can be neutralized with a strong base such as an alkali metal hydroxide to form a neutral salt of the monomer which is then polymerized to form a neutral homopolymer. U.S. Patent No. 4,065,422 to Lundmark, et al., discloses that homopolymers of salts of 2-acrylamido-2-methylpropanesulfonic acid impart lubricity to alcohol based compositions. The patentees disclose that homopolymers of salts which contain as cations sodium, potassium, ammonium, monoethanolamine, diethanolamine, triethanolamine and 2-amino-2-methyl-1-propanol are water-soluble polymers and that homopolymers of the salts of calcium and magnesium are water-insoluble. The patentees do not describe the lithium salt of poly(acrylamidomethyl-propanesulfonic acid) and do not describe the isolation of any homopolymeric salt in its solid form by any means, e.g. drying a solution of the homopolymeric salt.

The patentees of U.S. Patent No. 4,065,422 state that the alcohols useful in the compositions of that invention are the $C_1$-$C_{24}$ alcohols such as methanol, ethanol, isopropanol, propyl, lauryl, myristyl, cetyl, and stearyl alcohols as well as mixtures therof. The patentees go on to state that the polymers of their invention are surprisingly soluble in monohydric alcohols in view of the molecular weight of the polymer and the lesser solubility of acrylamide polymers of similar molecular weight.

However, the patentees of U.S. Patent No. 4,065,422 acknowledge that solubility of the polymers is not important in the applications contemplated therein so long as the polymer is dispersible in the alcohol. Moreover, in Example IX, the patentees state that the sodium salt of the homopolymer is dispersed in ethanol. Accordingly, it has been found that hompolymers of the alkali metal and alkaline earth metal salts of the monomer, disclosed in U.S. Patent No. 4,065,022, are not sufficiently soluble in highly polar organic solvents such as the lower alkanols to usefully thicken compositions based on these solvents.

### SUMMARY OF THE INVENTION

This invention relates to a thickened methanol composition comprising methanol and a thickening amount of a homopolymeric salt having a molecular weight between 50,000 and 5,000,000 and the recurring structural unit

$$-(CH_2-CH)-$$
$$O{=}C-NH-C-(CH_3)_2-CH_2-SO_3-Li,$$

wherein said homopolymeric salt is employed in an amount of 0.5% by weight of said composition.

This invention also relates to a thickened composition comprising a solution of poly(lithium 2-acrylamido-2-methylpropanesulfonate) and methanol and to the thickening of compositions based on methanol with poly(lithium acrylamidomethylpropanesulfonate).

In view of the relative insolubility of the homopolymers of the sodium, potassium and calcium salts of the acid monomer in highly polar organic solvents, it was surprisingly found that a homopolymer of the lithium salt of the monomer is sufficiently soluble in methanol to thicken it.

## DETAILED DESCRIPTION OF THE INVENTION

This invention relates to the novel solid salts of homopolymers of lithium acrylamidomethylpropanesulfonate. This homopolymer has a molecular weight between 50,000 and 5,000,000 and the recurring structural unit:

$$-(CH_2-\underset{|}{C}H)-$$
$$O=C-NH-C(CH_3)_2-CH_2-SO_3-\ Li$$

Preferred homopolymers have a molecular weight between 1,000,000 and 2,000,000 as determined by measuring the intrinsic viscosity of an aqueous solution of the homopolymer. These homopolymers can be obtained as dry particulate solids by drying the viscous aqueous solution of the homopolymer which results from the redox polymerization of the monomeric salt.

To determine the molecular weight of the homopolymers of this invention, the intrinsic viscosity can be used in the Mark-Houwink equation:

$$[n] = KM^a$$

wherein [n] is the intrinsic viscosity, M is the molecular weight and K is a constant for the particular polymer-solvent combination. Values of K and a are extensively tabulated in the Polymer Handbook, Brandrum and Immergent (1975). Because the values of K and a are not tabulated for poly-(acrylamidomethylpropanesulfonic acid), the values for poly(acrylic acid) are used in the equation to determine the molecular weight of the homopolymer of this invention.

It has been found that a homopolymer of the lithium salt of 2-acrylamido-2-methylpropanesulfonic acid is sufficiently soluble in methanol, even substantially anhydrous methanol, to thicken it, even though it is not sufficiently soluble in other highly polar organic solvents such as ethanol and isopropanol to thicken those solvents.

The homopolymers of the lithium salt of the monomer may be prepared as disclosed in U.S. Patent No. 4,065,422. In general, a sample of the acid monomer is neutralized with an amount of aqueous lithium hydroxide sufficient to convert substantially all of the acid monomer to its corresponding salt, which is then polymerized in solution.

The polymerization of the monomer is a redox polymerization which may be effected by standard redox polymerization techniques using standard redox catalysts. Examples of suitable redox catalysts include ammonium bisulfite, ferrous sulfate, hydrogen peroxide, and sodium metabisulfite. It is desirable to exclude oxygen from the reaction vessel as it may inhibit the polymerization process. The temperature of the reaction mixture is not critical but should be maintained between 2°C and 60°C. The molecular weight of the homopolymers so obtained will range from 50,000 to 5,000,000 as determined by its intrinsic viscosity. Chain transfer agents, such as mercaptosuccinic acid, may be employed in the polymerization reaction to obtain homopolymers of the desired molecular weight.

The product of the redox polymerization is a viscous aqueous solution which may then be dried to obtain the novel solid salts of this invention. Batch drying techniques such as freeze-drying and vacuum drying may be used, but a continuous method of drying such as the drum drying or extrusion drying of the homopolymeric salt is preferred. The drum drying and extrusion drying techniques useful in obtaining the dried particulate solid are described in U.S. application Serial No. 636,646.

Compositions based on methanol can be thickened by the addition of a sufficient amount of poly(lithium acrylamidomethylpropanesulfonate). Because the salts of this invention are soluble in substantially anhydrous solvents, i.e. those that contain, at most, only trace amounts of water, the organic solvent based compositions that can be thickened in accordance with this invention may contain, but need not contain substantial amounts of water. Thickening of such compositions may be desirable in many instances, e.g. to inhibit settling of solids suspended therein, to alter the flow properties of the composition, etc.

## REFERENCE-EXAMPLE

### Preparation of Poly(Ammonium Acrylamidomethylpropanesulfonate) (not according to the invention)

A 2,400.0 gram (g) sample of 2-acrylamido-2-methylpropanesulfonic acid monomer was weighed out

into a 18.92ℓ (5 gallon) polypropylene pail. A 12,688.0 g sample of cold tap water was added to the monomer and stirred with an air motor until all of the monomer had dissolved. The temperature of the resulting solution was 7° C.

A 747.0 g sample (832.0 milliliters (ml)) of concentrated aqueous ammonia (14.8 M) was added to the solution of monomer. The solution mixture exothermed to 17° C and the pH increased to 8.63. The pail was then covered with a sheet of polyethylene and sealed with adhesive tape. Nitrogen gas was bubbled through the solution with a sparge tube and the solution was thusly mixed with an air motor for one-half hour.

The catalysts, 40.0 ml of $K_2S_2O_8$ (0.376 g/100 ml), 40.0 ml of $K_2S_2O_5$ (0.378 g/100 ml) and 20.0 ml $FeSO_4 \cdot 7H_2O$ (0.24 g/100 ml) were then added via a funnel. Polymerization was evident within 2 minutes (min.) of the addition of the catalysts as evidenced by a thickening of the reaction mixture. About one-half hour after the addition of the catalysts, the stirrer and the sparge were removed and the holes were sealed with tape.

A 12.66 g amount of the resulting viscous solution was added to 387.34 g of deionized water and stirred for 10 min. to prepare a 0.5% solution of poly(ammonium acrylamidomethylpropanesulfonate). The flask containing resulting solution was placed in a 20° C constant temperature bath. This solution had a pH of 8.40 and Brookfield RVT viscosities of 534 cps (mPa.s) (#2/20 rpm) and 1216 cps (mPa.s) (#2/2.5 rpm) after one hour, and 514 cps (mPa.s) (#2/20 rpm) and 1136 cps (mPa.s) (#2/2.5 rpm) after 24 hours.

The remainder of the reaction product solution was dried to obtain a particulate solid. An amount of the dried solid was added to deionized water to prepare a 0.5% solution on a moisture free basis. The resulting solution had a pH of 4.97 and Brookfield RVT viscosities at 20° C of 478 cps (mPa.s) (#2/20 rpm) and 1024 cps (mPa.s) (#2/2.5 rpm) after one hour and 484 cps (mPa.s) (#2/20 rpm) and 1024 cps (mPa.s) (#2/2.5 rpm) after 24 hours.

Thickening of Lower Alcohols

A 4.0 g portion of the dried product from above was completely dissolved in 396 ml of 95% ethanol. The resulting solution exhibited Brookfield RVT viscosities at 25° C of 520 cps (mPa.s) (#2/20 rpm) and 1200 cps (mPa.s) (#2/2.5 rpm) after one hour and 520 cps (mPa.s) (#2/20 rpm) and 1180 cps (mPa.s) (#2/2.5 rpm) after 24 hours. Similar samples of the salt were similarly soluble in methanol and isopropanol.

In contrast, similarly prepared and dried samples of the homopolymers of sodium, potassium, and calcium salts of the monomer were not visibly soluble in and did not measurably thicken methanol, ethanol or isopropanol, i.e. when a 0.5 gram sample of any of these salts was added to 99.5 grams of solvent, none of the 0.5 gram appeared to dissolve to any extent and the solvent was not thickened.

EXAMPLE

Preparation of Poly(lithium Acrylamidomethylpropanesulfonate)

Poly(lithium acrylamidomethylpropanesulfonate) was prepared according to the procedure set forth in the reference example.

A 0.5 gram amount of a similarly prepared homopolymer of the lithium salt of the monomer completely dissolved in 99.5 gram of methanol to thicken the methanol, but the lithium salt homopolymer did not dissolve in and did not measurably thicken ethanol or isopropanol.

## Claims

**1.** A thickened methanol composition comprising methanol and a thickening amount of a homopolymeric salt having a molecular weight between 50,000 and 5,000,000 and the recurring structural unit

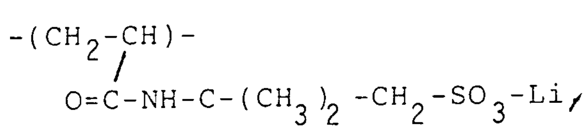

wherein said homopolymeric salt is employed in an amount of 0.5% by weight of said composition.

2. A thickened methanol composition as defined in claim 1 wherein the methanol is anhydrous methanol.

3. A thickened methanol compositon as defined in claim 1 wherein the homopolymeric salt has a molecular weight between 1,000,000 and 2,000,000.

4. A method of thickening methanol comprising adding to methanol a thickening amount of a homopolymeric Li-salt in accordance with claims 1 to 3.

5. A method of thickening a highly polar organic solvent comprising adding to a highly polar organic solvent a thickening amount of a homopolymeric Li-salt according to claims 1 to 3.

**Revendications**

1. Une composition de méthanol épaissie comprenant du méthanol et une quantité épaississante d'un sel homopolymère ayant un poids moléculaire entre 50 000 et 5 000 000 et le motif structural répété

$$-(CH_2-CH)-$$
$$|$$
$$O=C-NH-C(CH_3)_2-CH_2-SO_3-Li$$

dans laquelle ledit sel homopolymère est utilisé en une proportion de 0,5 % du poids de ladite composition.

2. Composition de méthanol épaissie comme défini dans la revendication 1, dans laquelle le méthanol est du méthanol anhydre.

3. Composition de méthanol épaissie comme défini dans la revendication 1, dans laquelle le sel homopolymère a un poids moléculaire entre 1 000 000 et 2 000 000.

4. Un procédé pour épaissir du méthanol comprenant l'addition au méthanol d'une quantité épaississante d'un sel de Li homopolymère selon les revendications 1 à 3.

5. Un procédé d'épaississement d'un solvant organique très polaire comprenant l'addition, à un solvant organique très polaire, d'une quantité épaississante d'un sel de Li homopolymère selon les revendications 1 à 3.

**Patentansprüche**

1. Eingedickte Methanol-Zusammensetzung, umfassend Methanol und eine eindickende Menge eines homopolymeren Salzes mit einem Molekulargewicht zwischen 50 000 und 5 000 000 und der sich wiederholenden Struktureinheit

$$-(CH_2-CH)-$$
$$|$$
$$O=C-NH-C-(CH_3)_2-CH_2-SO_3-Li,$$

worin das homopolymere Salz in einer Menge von 0,5 Gew.-% der Zusammensetzung eingesetzt wird.

2. Eingedickte Methanol-Zusammensetzung nach Anspruch 1, worin das Methanol wasserfreies Methanol ist.

3. Eingedickte Methanol-Zusammensetzung nach Anspruch 1, worin das homopolymere Salz ein Molekulargewicht zwischen 1 000 000 und 2 000 000 besitzt.

4. Verfahren zum Eindicken von Methanol, umfassend die Zugabe einer eindickenden Menge eines

homopolymeren Li-Salzes gemäß Ansprüchen 1 bis 3 zu Methanol.

**5.** Verfahren zum Eindicken eines stark polaren organischen Lösungsmittels, umfassend die Zugabe einer eindickenden Menge eines homopolymeren Li-Salzes gemäß Ansprüchen 1 bis 3 zu einem stark polaren organischen Lösungsmittel.